# EUROPEAN PATENT SPECIFICATION

(11) **EP 1 837 744 B1**
(45) Date of publication and mention of the grant of the patent: **15.08.2018**
(21) Application number: 07104540.5
(22) Date of filing: 21.03.2007
(51) Int. Cl.: G06F 3/046

(54) **Position sensing panel**
Positionsmesstafel
Panneau de détection de position

(30) Priority: 23.03.2006 JP 2006081605
(43) Date of publication of application: 26.09.2007
(73) Proprietor: Wacom Co., Ltd., Saitama 349-1148 (JP)
(72) Inventor: Katsurahira, Yuji, Kazo-city Saitama 347-0016 (JP)
(74) Representative: Richardt Patentanwälte PartG mbB

(56) References cited:
- JP-A- 4 322 319
- US-A1- 2005 127 868
- US-B1- 6 700 567

## Description

### Cross References to Related Applications

The present application claims priority to Japanese Application No. P2006-081605 filed on March 23, 2006.

### Background of the Invention

### Field of the Invention

The present invention relates to a position detecting device and computer suitably used when a position pointed by a position pointer is detected and processed. Particularly, in the case where a rechargeable power storage unit is provided for the position pointer, the charge thereof can be performed favorably.

### Description of the Related Art:

Japanese Examined Patent Application Publication No. 02-53805, for example, discloses a position detecting device of related art in which a reflective signal is transmitted by a position pointer in sync with a signal transmitted from a tablet where a loop coil is provided, and this reflective signal is received by the loop coil in the tablet to detect a position.

Also, Japanese Published Patent Application No. 10-214148, for example, proposes a position detecting device in which a power supply unit is incorporated in a position pointer, and signal transmission is performed using a power supply which increases transmission power, enabling accuracy of the position detection to be improved and enabling transmission of other identification information and like to be performed.

European Patent 0254297 B1 discloses a method of measuring the status of a position designating device. The principle behind the invention is that radio waves are generated by an antenna coil by application of an AC signal of a predetermined frequency thereto, and the status of a tuned circuit provided in the position detecting device is discriminated by a signal from the antenna coii at the time when the transmission of the radio waves is suspended, thereby detecting the pen-down status of the position detecting device.

US 6,700,567 does disclose a touch screen system including an input device and a screen in which the input device is cordless and receives RF power from an antenna in the screen. In one embodiment, the antenna is a coil and circumscribes the periphery of the touch screen. Further, the input device receives operating power whenever it is in proximity to the touch screen system.

In other words, there have been proposed position detecting devices of related art in which a signal transmitted from a position pointer is received by a loop coil in a tablet to detect a position, and the position detection and the like are favorably performed by incorporating a power supply unit in such position pointer.

### Summary of the Invention

For example, there is known and used an input device for a computer, which detects a position designated on a board called a tablet/digitizer and inputs position information. In such tablet/digitizer, a position detecting device is used to detect the designated position. Here, as for a method by which the position designated on the board is detected, various technologies are developed. Among those, a position detecting device of an electromagnetic induction method is assumed to be greatly efficient because of high reliability and other advantages based on non-contact detection.

In other words, when the position detecting device of the electromagnetic induction method is used, an alternating magnetic-field signal is transmitted from a loop coil provided in a tablet, and this alternating magnetic-field signal is tuned and received by a resonant circuit provided in a position pointer. Then, a resonant signal generated in the resonant circuit is transmitted from the coil constituting the resonant circuit. This resonant signal is received by the same or different loop coil, and a position designated by the position pointer is detected from a waveform of the received signal. Therefore, the position designated can be detected while the tablet and position pointer being in the non-contact condition.

There is further proposed a position detecting device of the electromagnetic induction method, in which a power supply unit is incorporated in a position pointer; an oscillating circuit is provided to increase transmitting power, improving the reliability of position detection; and identification information or the like in addition to position information can also be transmitted in the case where a plurality of position pointers are used, for example. There is also proposed a device in which the above power supply unit is configured to have a rechargeable power supply unit such as an electric double-layer capacitor, and therefore inconvenience of exchanging batteries and the like is prevented.

However, even in the case where the above-mentioned rechargeable power supply unit was used, means for inserting a position pointer into a predetermined charger, for example, was used when charging was performed in the past. Here, the means itself may cause an inconvenience to users. Then, in the explanation of the above-mentioned electromagnetic induction method, there is considered the charging of the power supply unit with electric power caused by a signal received in the resonant circuit by using an alternating magnetic-field signal first transmitted from a loop coil. Specifically, according to this, since the charging is performed by supplying an electromotive force of the resonant circuit to the charger, there is no inconvenience that a user charges the power supply unit.

On the other hand, a thin display device such as a liquid crystal display (LCD) has been developed, in which a screen thereof is also used as the surface of a tablet/digitizer, enabling a display device and tablet/digitizer to be integrally formed. In this case, since a distance is allowed between the pointer and surface in a position detecting device of the above-mentioned electromagnetic induction method, the position detecting device is typically provided on the rear side of the display device. However, in the case where the position detecting device is provided on the rear side of the display device, noise or the like that is generated from, for example, a drive circuit in the display device may interfere with the position detection.

On the contrary, it is conceivable to form a loop coil of the position detecting device with a transparent electrode such as an ITO (Indium-Tin-Oxide) film or the like, and the loop coil formed with the transparent electrode is provided on the display side of the display device. With this configuration, since the position detecting device is provided on the display surface side of the display device, the display device can be prevented from being disassembled in the production process and compatibility of the display device in the design stage can be increased. Then, it is considered that a power supply unit is incorporated in the above-mentioned position pointer, enabling transmitting power to increase and enabling the accuracy of position detection to be improved.

However, since a resistance value of the ITO film or the like is large, it is difficult to transmit a large electric power using the above-mentioned alternating magnetic-field signal in the case where the loop coil is formed with the transparent electrode such as ITO. Also, in the case where the loop coil is formed with a low-resistance member other than the ITO film, when obtaining the resonant signal of a typical range, there is no problem in a system in which a transmit/receive is carried out by switching the loop coil at high speed. However, it is difficult to transmit a large electric power in a short time and another exclusive circuit or the like is necessary to perform the transmission of the electric power.

In view of the above, it is desirable to obtain a position pointer not requiring battery exchange, which can be used without paying much attention to the electric-charging operation and from which a strong signal is transmitted with a simplified configuration. Further it is desirable to obtain a tablet in which the sensor coils are arranged on the front surface of a liquid crystal panel. Accordingly, it is desirable to provide a favorable position detecting device and computer.

Embodiments of the invention are as claimed in the independent claims; the dependent claims describe preferred embodiments.

According to an embodiment of the present invention, there is provided a position detecting device which includes: a position pointer that transmits a position-pointing signal by a power supply stored in a rechargeable power storage unit and a tablet that detects a position pointed by the position pointer when receiving the position-pointing signal. The position pointer includes a coil, a charging circuit charging the power storage unit and a transmitter transmitting the position-pointing signal. The tablet includes an exciting coil coiled around a circumference of a position detecting area, an exciting circuit supplying an alternating voltage to the exciting coil, a position-pointing signal detector detecting the position-pointing signal from the position pointer, and an excitation controller controlling a supply of the alternating voltage to the exciting coil based on the position-pointing signal detected.

Further, in the position detecting device according to an embodiment of the present invention, the tablet and a display device are integrally formed.

In the position detecting device according to an embodiment of the present invention, the excitation controller supplies the alternating voltage to the exciting coil when a detected result of the position pointed by the position pointer is within a predetermined distance range from a position where the exciting coil is arranged.

In the position detecting device according to an embodiment of the present invention, the coil of the position pointer both receives a charging signal by the alternating voltage from the exciting coil of the tablet and transmits the position pointing signal to the tablet.

In the position detecting device according to an embodiment of the present invention, the position pointer includes a resonant circuit configured with a coil and capacitor.

In the position detecting device according to an embodiment of the present invention, an electric double-layer capacitor is used as the power storage unit of the position pointer.

Further, according to another embodiment of the present invention, there is provided a computer that includes: a position detecting device that has a position pointer which transmits a position-pointing signal by a power supply stored in a rechargeable power storage unit and a tablet which detects a position pointed by the position pointer when receiving the position-pointing signal. The position pointer includes a coil, a charging circuit charging the power storage unit, and a transmitter transmitting the position-pointing signal. The tablet includes an exciting coil coiled around a circumference of a position detecting area, an exciting circuit supplying an alternating voltage to the exciting coil, a position-pointing signal detector detecting the position-pointing signal from the position pointer; and an excitation controller controlling a supply of the alternating voltage to the exciting coil based on the position-pointing signal detected.

In the computer according to an embodiment of the present invention, the tablet and a display device are integrally formed.

In the computer according to an embodiment of the present invention, the excitation controller supplies the alternating voltage to the exciting coil when a detected result of the position pointed by the position pointer is within a predetermined distance range from a position where the exciting coil is arranged.

In the computer according to an embodiment of the present invention, the coil of the position pointer both receives a charging signal by the alternating voltage from the exciting coil of the tablet and transmits the position pointing signal to the tablet.

In the computer according to an embodiment of the present invention, the position pointer includes a resonant circuit configured with a coil and capacitor.

In The computer according to an embodiment of the present invention, an electric double-layer capacitor is used as the power storage unit of the position pointer.

According to a further embodiment of the present invention, there is provided a method of operating a chargeable pointing device and sensor panel where the sensor panel comprises an excitation coil and a detection area. The method comprises determining the position of the chargeable pointing device and charging the chargeable pointing device if it is in the vicinity of the excitation coil.

According to embodiments of the position detecting device and computer of the present invention, the rechargeable power storage unit is provided in the position pointer and electric charging is performed by the exciting coil wound around the circumference of the tablet. Therefore, the position detecting device and computer can be used continuously in normal use condition without paying attention to the electric-charging operation. Further, there is no need to install an exclusive charger and also no need to exchange a battery. Also, since a signal transmitted from the position pointer is received by the tablet, the detected signal is prevented from being weak such as the ones of the past and the influence of noise can be avoided. Furthermore, since the loop coil used for detecting the position is obtained by transparent material such as an ITO film or the like, a tablet sensor can be arranged on the front surface of the liquid crystal panel and the like. Further, since charging is only preformed when the position pointer is in the vicinity of the exciting coil, energy is saved by avoiding unnecessary electricity supply to the exciting coil.

### Brief Description of the Drawings

In the following, embodiments of the invention will be described, by way of example only, and with reference to the drawings in which:
- FIG. 1: is a block diagram including a schematic view for explanation, showing a configuration of a tablet applied to a position detecting device and computer according to an embodiment the present invention;
- FIG. 2: is an explanatory diagram, showing a structure of the tablet in the embodiment;
- FIG. 3: is a block diagram showing a configuration of a position pointer applied to a position detecting device and computer according to an embodiment of the present invention;
- FIG. 4: is an explanatory diagram showing an internal structure of the position pointer in the embodiment;
- FIG. 5: is a circuit diagram showing a specific example of a driving circuit;
- FIG. 6: is an explanatory diagram showing operations of a position pointer in the case where electric charging is not performed;
- FIG. 7: is an explanatory diagram showing operations of a position pointer in the case where electric charging is performed; and
- FIG. 8: is a flow chart for explaining the operation of a tablet applied to a position detecting device and computer according to an embodiment of the present invention.

### Description of the Preferred Embodiments

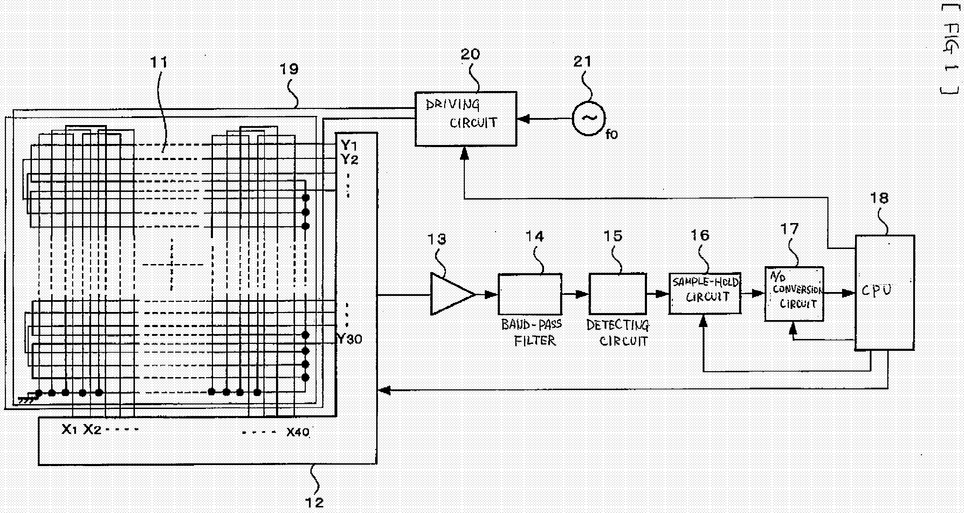

The present invention is hereinafter explained with reference to the drawings. FIG. 1 is a block diagram including a schematic view for explaining a configuration of an embodiment of a tablet applied to a position detecting device and computer according to the present invention.

FIG. 1 shows a loop-coil group 11 in which loop coils X1 to X40 and loop coils Y1 to Y30 are arranged in the X-axis and Y- axis directions, respectively. A position detecting area configured with the loop-coil group 11 is integrally formed with an LCD (Liquid Crystal Display) device not shown in the figure, and the size and pitch of array of the loop-coil group 11 is determined such that this position detecting area corresponds to a display area of the LCD device. Further, these loop coils are connected to a selection circuit 12 that selects each of the loop coils.

An output terminal of the loop coils X1 to X40 and Y1 to Y30 is selected by this selection circuit 12 to be connected to an amplifying circuit 13 which is connected to a band-pass filter 14 having a center frequency f0. The band-pass filter 14 is connected to a detecting circuit 15. Further, the detecting circuit 15 is connected to a sample-hold circuit 16, and a voltage maintained by the sample-hold circuit 16 is transferred to an A/D (Analog to Digital) conversion circuit 17. Then, an output of the A/D conversion circuit 17 is sent to a CPU (Central Processing Unit) 18.

Further, an exciting coil 19 is coiled around the circumference of the position detecting area. Note that, though the exciting coil 19 of two turns is illustrated in the figure, a coil of eight to more than a dozen turns may be used practically. Then, this exciting coil 19 is connected to a driving circuit 20 which is connected to an oscillating circuit 21 that oscillates at frequency f0. Also, the CPU 18 transmits control signals to the selection circuit 12, sample-hold circuit 16, A/D conversion circuit 17 and driving circuit 20.

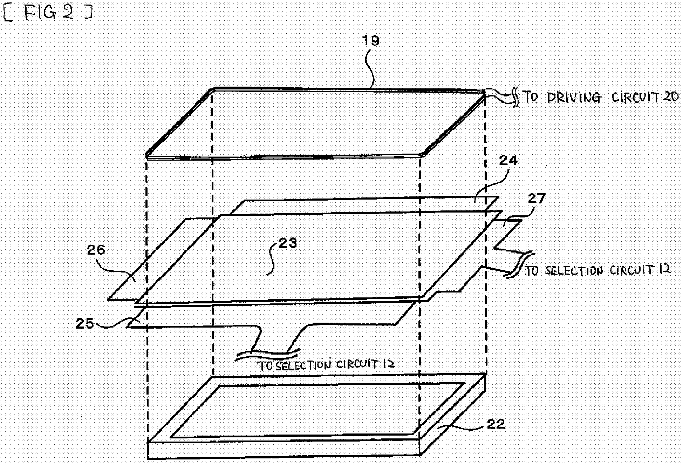

FIG. 2 shows an embodiment of a three-dimensional structure of a tablet portion in which LCD device (panel) 22 and a glass-sensor 23 are provided.

This glass-sensor 23 is made of, for example, two glass sheets of about 0.4mm in thickness stacked together, on each of which the pattern of the loop-coil group 11 is formed using an ITO film. Specifically, the pattern of the loop coils X1 to X40 for one glass sheet and the pattern of the loop coils Y1 to Y30 for the other glass sheet are formed by an etching method, respectively. Then, these glass sheets are provided such that a transparent insulating sheet is held in between the surfaces of ITO films facing each other.

Also, a flexible board 24 based on a polyimide material, for example, is provided and to which the pattern of each line of the loop coils X1 to X40 in the glass-sensor 23 is connected such that a turn-back portion making a loop is formed. Furthermore, a flexible board 25 based on a polyimide material, for example, is provided and to which the pattern of each line of the loop coils X1 to X40 in the glass-sensor 23 is connected. Further, a terminal obtained in the flexible board 25 is connected to the selection circuit 12.

Similarly, a flexible board 26 based on a polyimide material, for example, is provided and to which the pattern of each line of the loop coils Y1 to Y30 in the glass-sensor 23 is connected such that a turn-back portion making a loop is formed. Furthermore, a flexible board 27 based on a polyimide material, for example, is provided and to which the pattern of each line of the loop coils Y1 to Y30 in the glass-sensor 23 is connected. Further, a terminal obtained in the flexible board 27 is connected to the selection circuit 12.

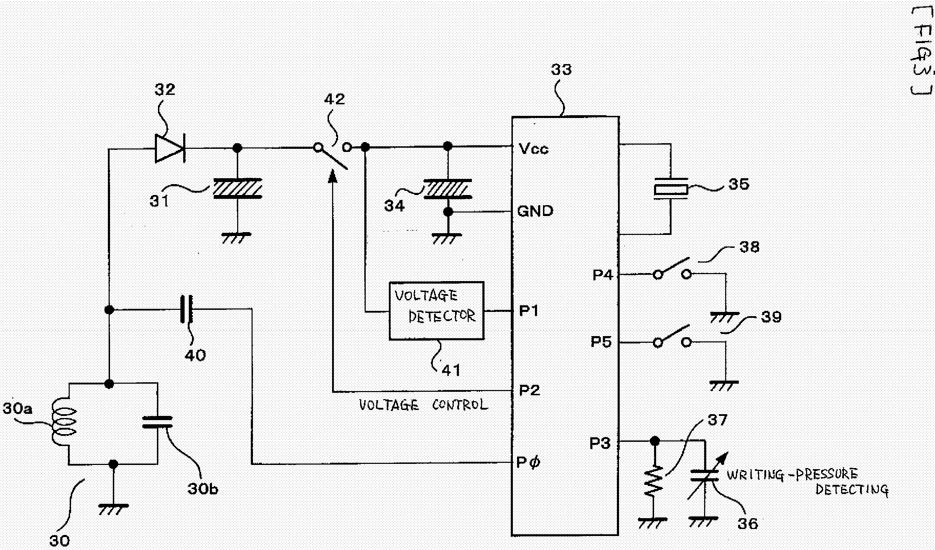

Next, FIG. 3 is a block diagram showing a configuration of a position pointer applied to a position detecting device and computer according to an embodiment of the present invention.

In FIG. 3, a coil 30a and a capacitor 30b are provided to configure a resonant circuit 30 of a resonant frequency f0. Also, an electric double-layer capacitor 31 and a diode 32 are configured so that a voltage generated in the resonant circuit 30 by an alternating magnetic field transmitted from the exciting coil 19 of the aforementioned tablet is rectified by the diode 32 to charge the electric double-layer capacitor 31 with the rectified voltage.

Further, a micro processor 33 including a ROM (Read Only Memory) and RAM (Random Access Memory) is provided and performs operations according to a predetermined program. Also, an aluminum-electrolytic capacitor 34 keeps a power supply voltage of the micro processor constant. Furthermore, an oscillating element 35 of aforementioned frequency f0 generates a clock signal of the micro processor 33, and also generates a signal of frequency f0 which is radiated from the later described resonant circuit 30 based on this signal.

Also, there is provided a variable capacitor 36 whose capacity is changed by a writing pressure when a user pushes a nib of the position pointer down to the tablet. The variable capacitor 36 detects the writing pressure as a digital value by measuring a discharge time that depends on a time constant between it and a resistor 37. Further, switches 38 and 39 are provided on the side surface of the position pointer, and information about mode-setting and the like executed by a user operating those switches 38, 39 is supplied to the micro processor 33.

Further, a capacitor 40 supplies a signal of frequency f0 transmitted from the micro processor 33 to the resonant circuit 30. Also, a voltage detector 41 outputs a signal corresponding to whether or not a voltage at both ends of the aluminum-electrolytic capacitor 34 is a predetermined value or more, and supplies the signal to the micro processor 33. Further, a switch 42 is provided to control ON/OFF between the electric double-layer capacitor 31 and aluminum-electrolytic capacitor 34 based on the control signal from the micro processor 33.

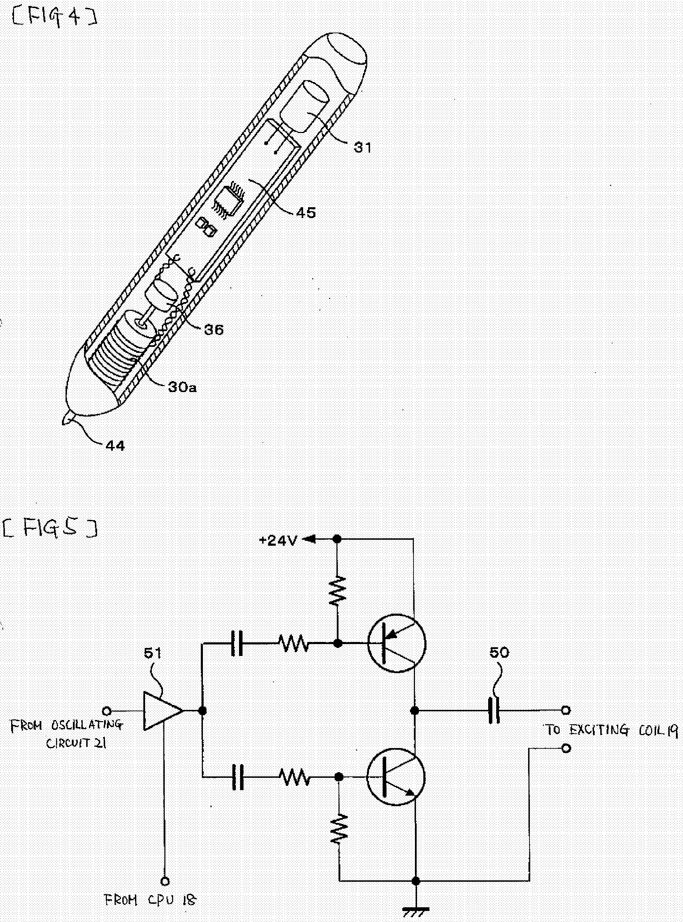

FIG. 4 shows a specific structure of the position pointer shown in FIG. 3. FIG. 4 shows a nib 44 and a coil 30a constituting the resonant circuit of frequency f0 in which wires are coiled around a hollow cylindrical-shaped ferrite material in this figure. Also, a pressure applied to the nib is transmitted to the variable capacitor 36 to be detected. In addition, a circuit board 45 is configured to have circuits shown in FIG. 3, with which the electric double-layer capacitor 31 is installed.

Next, FIG. 5 shows a specific example of the driving circuit 20 shown in FIG. 1. A capacitor 50 and the exciting coil 19 in FIG. 1 constitute the resonant circuit of frequency f0. Also, a three-state buffer 51 has a CMOS structure and passes the signal of frequency f0 supplied from the oscillating circuit 21 in FIG. 1. Then, a control terminal of the three-state buffer 51 is connected to the CPU 18 in FIG. 1 which controls ON/OFF of an electric current to the exciting coil 19.

Hereupon, the circuit shown in FIG. 5 is operated by a positive direct current voltage of 24V, for example, and the alternating voltage in the range of about 70Vpp to 100Vpp is generated at both ends of the exciting coil 19. When the position pointer shown in FIG. 4 is brought in the proximity of the exciting coil 19 while the alternating current is being generated, a voltage is generated in the resonant circuit 30 of the position pointer by the alternating magnetic-field signal of the exciting coil 19. Then, the voltage is rectified in the diode 32 to be supplied to the electric double-layer capacitor 31, so that the electric double-layer capacitor 31 can be charged rapidly.

The operation of an embodiment configured as described above is further explained in the followings. First, the operation of the voltage detector 41 and switch 42 in FIG. 3 is explained with respect to keeping the voltage at both ends of the aluminum-electrolytic capacitor 34 constant (1.8V, here).

Specifically, in the circuit in FIG. 3, the voltage detector 41 outputs a high level if an input voltage (the voltage at both ends of the aluminum-electrolytic capacitor 34) is 1.8V or more, and outputs a low level if the input voltage is less than 1.8V. Further, the micro processor 33 reads a value at a terminal P1 periodically and checks whether or not the voltage at both ends of the aluminum-electrolytic capacitor 34 is 1.8V or more. Then, if the voltage at both ends of the aluminum-electrolytic capacitor 34 is less than 1.8V, a terminal P2 is made high only during a particular period and the switch 42 is turned on.

In this way, the micro processor 33 controls the switch 42 to be turned on, and so the electric charge of the electric double-layer capacitor 31 is transferred to the aluminum-electrolytic capacitor 34. Hence, the voltage of the aluminum-electrolytic capacitor 34 is raised and the voltage is controlled to be approximately 1.8V. Further, it is preferable that a period of time in which the switch 42 is turned on is made short to be several to several tens of microseconds, at this time. Also, the voltage at both ends of the aluminum-electrolytic capacitor 34 is here set to 1.8V which is a minimum voltage to operate the micro processor 33.

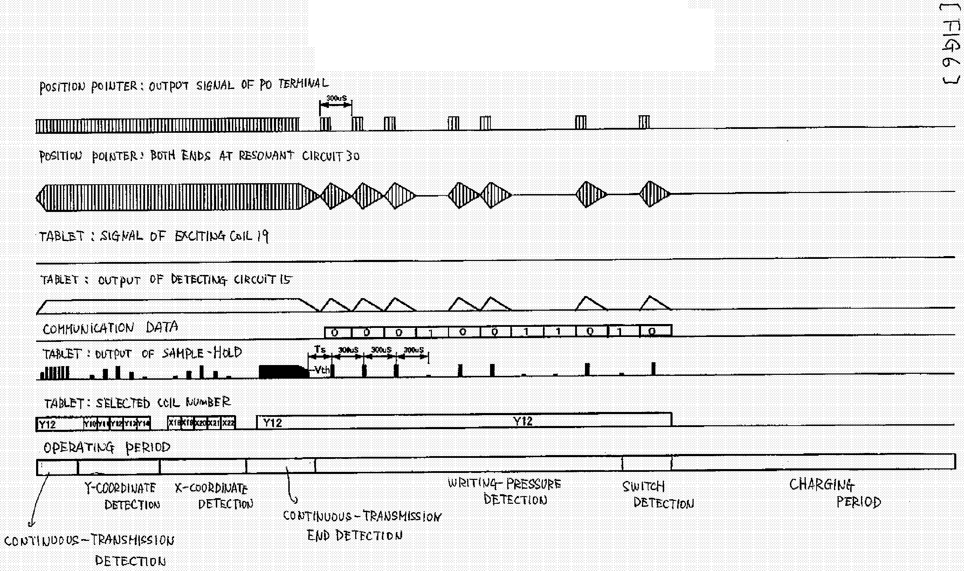

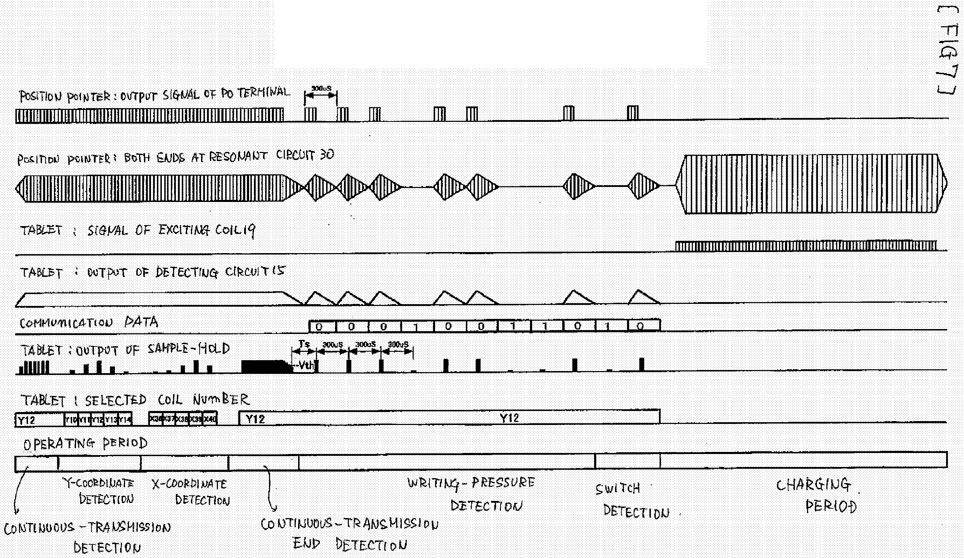

Next, FIGS. 6 and 7 show a waveform and operational condition of each portion in the aforementioned embodiment. In this embodiment, the charging operation is executed only in the case where a position pointed by the position pointer is near to the exciting coil 19, namely, is in the circumferential portion of the display area. Here, FIG. 6 shows a waveform and operational condition of each portion in the case in which the position pointed by the position pointer is not in the circumferential portion. Also, FIG. 7 shows a waveform and operational condition of each portion in the case in which the position pointed by the position pointer is in the circumferential portion.

In each of FIGS. 6 and 7, the highest line and next line show the state of signals transmitted from the coil 30a of the position pointer. In this case, the micro processor 33 detects writing pressure applied to the variable capacitor 36 and converts this into 9 bits digital data. Then, the microprocessor 33 outputs 11 bits of data to which 2 bits of data obtained by detecting the operational condition of the switches 38 and 39 are added, from a terminal P0. Note that, the output signal from the terminal P0 has been modulated by the aforementioned frequency f0 as a carrier wave.

Therefore, the signal of this frequency f0 is supplied to the resonant circuit 30 through the capacitor 40 and is transmitted from the coil 30a. Further, this output is intermittent transmission at a predetermined cycle (300 microseconds, here), in which values of data are represented as follows: when data is "0" the signal is transmitted and when data is "1" the signal is not transmitted. A method by which writing pressure applied to the variable capacitor 36 is converted to a digital value is not explained here, because Japanese Published Patent Application No. 07-175572 and others disclose such technology.

Furthermore, regarding the signal transmitted from the coil 30a, a sufficiently long and continuous transmission period (about 2 to 4 milliseconds, for example) is provided prior to the transmission of the above-mentioned 11 bits of data in order to facilitate the detection of data head by the tablet. Subsequent to the transmission of the above-mentioned 11 bits of data, the micro processor 33 stops transmission of the signal only during a charging period (2 milliseconds, here) equivalent to a charging period described later on. Then, the micro processor 33 repeats the operations of the continuous-transmission period, data transmission period and charging period.

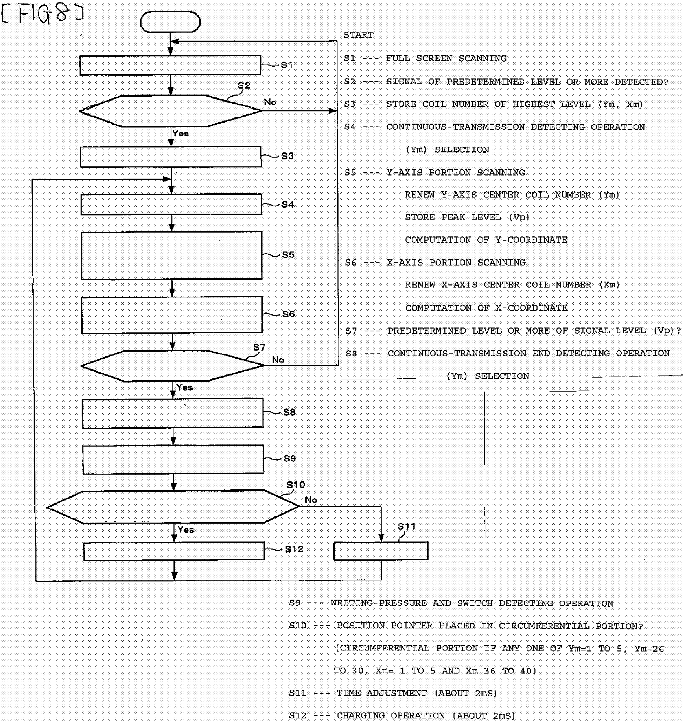

Then, FIG. 8 shows a flow chart in which operation of the tablet corresponding to the operation of the position pointer is explained when the position pointer that operates as mentioned above is placed on the tablet. In other words, FIG. 8 shows an operational flow of the CPU 18 in FIG. 1.

After the operation is started in FIG. 8, the CPU 18 performs full-screen scanning in which the control signal is output to the selection circuit 12 and each coil of X1 to X40 and Y1 to Y30 is selected one by one to detect an approximate location where the position pointer is placed (step S1). The detailed explanation of the full-screen scanning is omitted here because it is performed similarly to a device of related art. However, since the transmission from the position pointer is intermittently executed as mentioned above, it is preferable that one loop coil is selected and the signal thereof is received continuously for a sufficiently long time than the cycle of transmission from the position pointer.

Next, it is judged whether or not the signal level of a certain value or more is detected from the loop coil (step S2). At this time, if the signal level of the certain value or more is not detected from any one of loop coils (No), it is judged that the position pointer is not placed on the tablet and the full screen scanning is repeated in the step S1. On the other hand, if the signal level of the certain value or more is detected from an arbitrary loop coil (Yes), the number of the loop coil obtained in the full-screen scanning which is nearest to the position pointer is stored as values of Xm and Ym (step S3).

Here, assuming that the position pointer exists near the intersection point of the loop coils X20 and Y12, the operation is explained in the followings with reference to FIG. 6. Specifically, FIG. 6 shows operations by which the detailed position pointed by the position pointer is obtained and by which 11-bit operational information transmitted from the position pointer is detected.

Then, the CPU 18 transmits the control signal to the selection circuit 12 to select the loop coil Y12 and performs operation of detecting the start of continuous transmission from the position pointer (step S4). In this continuous-transmission start detecting operation, the sample-hold circuit 16 is continuously operated at sufficiently short intervals than the above-mentioned intermittent-transmission cycle and it is checked whether or not a signal level detected each time is the certain value or more continuously. When the signal level of the certain value or more is continuously detected for a time sufficiently longer than the aforementioned intermittent-transmission cycle, it is judged that the operation of the position pointer has entered the continuous-transmission period.

After it is judged that the operation of the position pointer has entered the continuous-transmission period, the CPU 18 starts Y-axis portion scanning for detecting Y-coordinate (step S5). In other words, the CPU 18 transmits the control signal to the selection circuit 12 to select a loop coil Y10, and further transmits the control signal to the sample-hold circuit 16 to detect the signal level. Similarly, loop coils from Y11 to Y14 are selected one by one and each signal level is detected. At this time, the highest signal level is detected when the loop coil Y12 is selected, and as away from the Y12, the detected level becomes lower.

Therefore, a Y-coordinate value at a position on the tablet exactly pointed by the position pointer can be obtained by computing the distance between respective coils by the interpolation method based on the distribution of the detected level of the loop coils Y10 to Y14. Note that, this computation using the interpolation method is not explained here, because it is performed similarly to a device of related art. Also, in this case, if the peak of detected levels of the loop coils Y10 to Y14 is not the level of the Y12, it is judged that the position pointer has moved and a value Ym, that is, the number of loop coil is renewed. Furthermore, the peak level (Vp) is stored.

After the Y-coordinate value is obtained at the step S5, next, the CPU 18 controls the selection circuit 12 to select loop coils from X18 to X22 one by one, and X-axis portion scanning is performed to obtain a X-coordinate value based on the signal-level distribution obtained similarly to the Y-axis (step S6). Then, an X-coordinate value at a position on the tablet exactly pointed by the position pointer can be obtained by computing the distance between respective coils by the interpolation method based on the distribution of the detected level of the loop coils X18 to X22. Also, at this time, a value Xm, that is, the number of loop coil is renewed similarly to the Y-axis.

Further, it is judged whether or not a peak level (Vp) obtained by the Y-axis portion scanning has reached a predetermined value (step S7). Then, if the peak level (Vp) has not reached the predetermined value (No), it is judged that the position pointer was removed, and the CPU 18 returns the operation to the step S1 and restarts the position detection from the full screen scanning.

Thus, coordinates on the tablet pointed by the position pointer is obtained. Then, after the pointed coordinates are obtained, the CPU 18 starts continuous-transmission end detecting operation (step S8). This continuous-transmission end detecting operation is one of the operations for detecting data sequentially transmitted from the position pointer with an accurate timing and without error, by accurately detecting a timing at which the operation within the position pointer enters the intermittent-transmission period from the continuous-transmission period.

In other words, at the step S8, the CPU 18 transmits the control signal to the selection circuit 12 to select the loop coil of the loop-coil number Ym renewed in the step S5, and further the CPU 18 transmits the control signal to the sample-hold circuit 16, detecting the signal level. Also, in this step S8, the sample-hold circuit 16 and the A/D conversion circuit 17 are operated repeatedly, and a time (Ta) at which the signal level detected becomes about half the aforementioned peak level (Vp) is obtained.

Further, after the continuous transmission from the position pointer has ended, a total of 11 bits of data indicating the aforementioned writing pressure and switch information is transmitted from the position pointer with a cycle of 300 microseconds, as a result with or without transmission. Then, the CPU 18 starts the writing-pressure and switch detecting operation (step S9). Specifically, the CPU 18 operates the sample-hold circuit 16 and A/D conversion circuit 17 at a timing of only a predetermined time (Ts) passed from the continuous-transmission end time (Ta) obtained at the step S8, detecting the signal level.

Accordingly, if the level detected at this time is equal to or more than half the peak level (Vp), the CPU 18 judges that a first bit (lowest bit) of writing-pressure data transmitted from the position pointer is "0", and if the level detected at this time is less than half the peak level (Vp), the CPU 18 judges that the first bit is "1". In this case, the predetermined time Ts is a value that was obtained in advance by an experiment etc. such that the voltage in the detecting circuit 15 is detected at the timing around the maximum thereof when the transmission data from the position pointer is "0".

Subsequently, in order to receive a second bit of writing-pressure data transmitted from the position pointer, the CPU 18 operates the sample-hold circuit 16 and A/D conversion circuit 17 at the time when 300 microseconds (that is the intermittent-transmission cycle of the position pointer) passed since the time when sample-hold was performed last time, detecting the signal level. Then, the second bit of the writing pressure transmitted from the position pointer is similarly obtained based on the detected level at this time. Further, the CPU 18 detects the signal level while continuing the subsequent cycle of 300 microseconds, and 9 bits of the writing pressure and 2 bits of switch information are detected.

After 9 bits of the writing pressure and 2 bits of switch information are detected at the step S9, subsequently, as mentioned above, the position pointer enters a transmission-stop period of 2 milliseconds as the period for charging. In that period, the CPU judges whether or not the position pointed by the position pointer is in the circumferential portion of an LCD area based on the loop-coil numbers Xm and Ym obtained at the steps S5 and S6 (step S10). Note that, in this embodiment, if either the X-axis loop-coil number or the Y-axis loop-coil number obtained is within five from the edge, it is judged the position pointer is in the circumferential portion.

Then, in this case, according to the above explanation, the loop-coil numbers are Ym = 12 and Xm = 20, therefore, it is not the circumferential portion (step S10 = No), and the charging operation is not executed. Then, after a time adjustment of about 2 milliseconds (step S12), the operation returns to the step S4 and again the operation to detect continuous transmission from the position pointer is performed. Note that, FIG. 6 shows the waveform and operational condition of each portion when the position pointed by the position pointer of this case is not in the circumferential portion.

On the contrary, FIG. 7 shows the case in which the position pointed by the position pointer is in the circumferential portion (step S10 = Yes), and for example, it shows the operation when the position pointer is placed in the vicinity of a loop-coil number X39. Then, in this case, in order to execute the charging operation in the period of about 2 milliseconds at the step S12, the CPU 18 transmits the control signal to the driving circuit 20 to output the exciting signal of frequency f0 from the exciting coil 19. After that, the operation is returned to the step S4, and again the operation of detecting continuous transmission from the position pointer is performed.

It should be noted that the electric power generated in the coil 30a of the position pointer by the aforementioned exciting signal is considerably strong in comparison with the electric power at the time of usual operation. Therefore, the electric double-layer capacitor 31 is charged through a diode 32. Also, the electric double-layer capacitor can be charged in a short time of several to several tens of seconds. Moreover, having a large capacity, the electric double-layer capacitor can be used continuously over several tens of minutes to several hours once it is charged.

Therefore, in the aforementioned embodiment, for example, after bringing the position pointer to the circumferential portion only for ten seconds or so, continuous use thereof at the center portion for about an hour becomes possible. On the other hand, it is unlikely that a user will operate the position pointer only at the center portion continuously for hours. Therefore, according to this embodiment, an operator can use it continuously without considering the operation of charging.

It should be noted that in the above- mentioned embodiment electric charging is executed only when the position pointer is in the circumferential portion. The reason is that the effective charging is not performed when the position pointer is away from the exciting coil 19. With this, the efficiency of charging is improved by avoiding unnecessary electricity being supplied to the exciting coil and also energy can be saved. Further, although the electric power is extracted by one diode in the above-mentioned embodiment, full-wave rectification may be applied using two or more diodes.

Further, in the above-mentioned embodiment, although the charging period is provided after the continuous transmission and data transmission, it may be provided between individual bits of the data transmission. Furthermore, although the electric double-layer capacitor is used as the power storage unit for the position pointer, a nickel-cadmium cell may also be used.

Consequently, according to an embodiment of the present invention, a position detecting device is provided. The position detecting device includes: a position pointer which transmits a position-pointing signal by a power supply stored in a rechargeable power storage unit and a tablet which detects a position pointed by the position pointer when receiving the position-pointing signal. The position pointer includes: a coil, a charging circuit charging the power storage unit, and a transmitter transmitting said position-pointing signal. The tablet includes: an exciting coil coiled around a circumference of a position detecting area, an exciting circuit that supplies an alternating voltage to the exciting coil, a position-pointing signal detector that detects the position-pointing signal from the position pointer, and an excitation controller that controls a supply of the alternating voltage to the exciting coils based on the position-pointing signal detected. Accordingly, there is obtained the position pointer not requiring battery change and not requiring much attention to the electric-charging operation and transmitting a strong signal using a simplified configuration. Also the tablet is obtained in which the sensor coils can be arranged on the front surface of a liquid crystal panel.

Further, according to an embodiment of the present invention, a computer is provided. The computer includes: a position detecting device that has a position pointer which transmits a position-pointing signal by a power supply stored in a rechargeable power storage unit and a tablet which detects a position pointed by the position pointer when receiving the position-pointing signal. The position pointer includes: a coil, a charging circuit charging the power storage unit, and a transmitter transmitting said position-pointing signal. The tablet includes: an exciting coil coiled around a circumference of a position detecting area, an exciting circuit that supplies an alternating voltage to the exciting coil, a position-pointing signal detector that detects the position-pointing signal from the position pointer, and an excitation controller that controls a supply of the alternating voltage to the exciting coils based on the position-pointing signal detected. Accordingly, there is obtained the position pointer not requiring battery change and not requiring much attention to the electric-charging operation and transmitting a strong signal using a simplified configuration. Also the tablet is obtained in which the sensor coils can be arranged on the front surface of a liquid crystal panel. Consequently, a favorable computer can be provided.

In addition to a computer system, the sensor panel described above may be incorporated in electrical appliances such as a personal digital assistant, a digital camera, a mobile telephone, a smart phone, or a digital photograph viewer.

It should be understood by those skilled in the art that various modifications, combinations, sub-combinations and alterations may occur depending on design requirements and other factors insofar as they are within the scope of the appended claims.

### Reference Numerals

### FIG. 1

- 14: BAND-PASS FILTER
- 15: DETECTING CIRCUIT
- 16: SAMPLE-HOLD CIRCUIT
- 17: A/D CONVERSION CIRCUIT
- 18: CPU
- 20: DRIVING CIRCUIT

### FIG. 2

- 12: TO SELECTION CIRCUIT
- 20: TO DRIVING CIRCUIT

### FIG. 3

- 41: VOLTAGE DETECTOR
VOLTAGE CONTROL
WRITING-PRESSURE DETECTION

### FIG. 5

- 21: FROM OSCILLATING CIRCUIT
- 18: FROM CPU
- 19: TO EXCITING COIL

### FIG. 6, FIG. 7

- POSITION POINTER: OUTPUT SIGNAL OF PO TERMINAL
- 30: POSITION POINTER: BOTH ENDS AT RESONANT CIRCUIT
- 19: TABLET: SIGNAL OF EXCITING COIL
- 15: TABLET: OUTPUT OF DETECTING CIRCUIT
COMMUNICATION DATA
TABLET: OUTPUT OF SAMPLE-HOLD

TABLET: SELECTED COIL NUMBER
OPERATING PERIOD
CONTINUOUS-TRANSMISSION DETECTION
Y-COORDINATE DETECTION
X-COORDINATE DETECTION
CONTINUOUS-TRANSMISSION END DETECTION
WRITING-PRESSURE DETECTION
SWITCH DETECTION
CHARGING PERIOD

### FIG. 8

- START
- S1: FULL SCREEN SCANNING
- S2: SIGNAL OF PREDETERMINED LEVEL OR MORE DETECTED?
- S3: STORE COIL NUMBER OF HIGHEST LEVEL (Ym, Xm)
- S4: CONTINUOUS-TRANSMISSION DETECTING OPERATION
(Ym) SELECTION
- S5: Y-AXIS PORTION SCANNING
RENEW Y-AXIS CENTER COIL NUMBER (Ym)
STORE PEAK LEVEL (Vp)
COMPUTATION OF Y-COORDINATE
- S6: X-AXIS PORTION SCANNING
RENEW X-AXIS CENTER COIL NUMBER (Xm)
COMPUTATION OF X-COORDINATE
- S7: PREDETERMINED LEVEL OR MORE OF SIGNAL LEVEL (Vp)?
- S8: CONTINUOUS-TRANSMISSION END DETECTING OPERATION (Ym) SELECTION
- S9: WRITING-PRESSURE AND SWITCH DETECTING OPERATION
- S10: POSITION POINTER PLACED IN CIRCUMFERENTIAL PORTION? (CIRCUMFERENTIAL PORTION IF ANY ONE OF Ym=1 TO 5, Ym=26 TO 30, Xm= 1 TO 5 AND Xm 36 TO 40)
- S11: TIME ADJUSTMENT (ABOUT 2mS)
- S12: CHARGING OPERATION (ABOUT 2mS)

## Claims

1. A sensor pane! for detecting the position pointed by a position pointer, the sensor panel comprising:
- an exciting coil (19) coiled around a circumference of a position detecting area, an exciting circuit (21) operable to supply an alternating voltage to said exciting coil, a position-pointing signal detector (11) for detecting a position-pointing signal from said position pointer,
**characterized in that**
the sensor panel further comprises an excitation controller (20) for controlling a supply of the alternating voltage to said exciting coil depending on said position-pointing signal detected, wherein said excitation controller is operable to supply the alternating voltage to said exciting coii when a detected result of the position pointed by said position pointer is within a predetermined distance range from a position where said exciting coil is arranged.

2. The sensor panel according to claim 1, wherein
said sensor panel and a display device (22) are integrally formed.

3. A position detecting device comprising:
a position pointer operable to transmit a position-pointing signal by a power supply stored in a rechargeable power storage unit (31); and
a sensor panel according to any one of claims 1 or 2.

4. The position detecting device according to claim 3, wherein
a coil (30a) in said position pointer is operable to both receive a charging signal by said alternating voltage from the exciting coil of said sensor panel and transmit said position pointing signal to said sensor panel.

5. The position detecting device according claim 4, wherein
said position pointer includes a resonant circuit (30) configured with a coil (30a) and capacitor (30b).

6. The position detecting device according to claim 3 to 5, wherein
an electric double-layer capacitor is used as the power storage unit of said position pointer.

7. An electrical appliance, comprising:
a sensor panel according to any one of claims 1 or 2.

8. An electrical appliance, comprising:
a position detecting device according to any one of claims 3 to 6.

9. The electrical appliance of claims 7 or 8 being a computer, personal digital assistant, digital camera, mobile telephone, smart phone, or digital photograph viewer.

10. A method of operating a chargeable pointing device and sensor panel, the sensor panel comprising an excitation coil and a detecting area, the method comprising:
determining the position in the detecting area of the chargeable pointing device (S5, S6);
**characterized in that** the method further comprises
charging the chargeable pointing device (S12) if it is in the vicinity of the excitation coil, wherein an alternating voltage is supplied to said exciting coil when a detected result of the position pointed by said position pointer is within a predetermined distance range from a position where said exciting coil is arranged.

11. The method claim 10, wherein the exciting coil is coiled around the circumference of the detecting area, and the step of charging the chargeable pointing device further comprises charging the chargeable pointing device if it is in a circumferential position.

## Patentansprüche

1. Sensortafel zum Erkennen der Position, auf die ein Positionszeiger zeigt, wobei die Sensortafel umfasst:
- eine Erregerspule (19), die um einen Umfang eines Positionserkennungsbereichs gewickelt ist, ein Erregerstromkreis (21), der zum Versorgen der genannten Erregerspule mit einer Wechselspannung funktionell ist, einen Positionszeigesignaldetektor (11) zum Erkennen eines Positionszeigesignals von dem genannten Positionszeiger,
**dadurch gekennzeichnet, dass**
die Sensortafel ferner eine Erregungssteuereinheit (20) umfasst zum Steuern einer Versorgung der genannten Erregerspule mit der genannten Wechselspannung in Abhängigkeit von dem genannten erkannten Positionszeigesignal, wobei die genannte Erregungssteuereinheit funktionell ist zum Versorgen der genannten Erregerspule mit Wechselspannung, wenn ein erkanntes Ergebnis der Position, auf die der genannte Positionszeiger zeigt, innerhalb eines vorbestimmten Entfernungsbereichs von einer Position ist, an der die genannte Erregerspule angeordnet ist.

2. Sensortafel nach Anspruch 1, wobei
die genannte Sensortafel und eine Anzeigevorrichtung (22) einstückig ausgebildet sind.

3. Positionserkennungsvorrichtung, umfassend:
einen Positionszeiger, der funktionell ist zum Senden eines Positionszeigesignals durch eine Stromversorgung, die in einer aufladbaren Stromspeichereinheit (31) gespeichert wird; und
eine Sensortafel nach einem der Ansprüche 1 oder 2.

4. Positionserkennungsvorrichtung nach Anspruch 3, wobei
eine Spule (30a) in dem genannten Positionszeiger funktionell ist sowohl zum Empfangen eines Ladesignals durch die genannte Wechselspannung von der Erregerspule der genannten Sensortafel als auch zum Senden des genannten Positionszeigesignals an die genannte Sensortafel.

5. Positionserkennungsvorrichtung nach Anspruch 4, wobei
der genannte Positionszeiger einen Schwingkreis (30) beinhaltet, der mit einer Spule (30a) und einem Kondensator (30b) konfiguriert ist.

6. Positionserkennungsvorrichtung nach Anspruch 3 bis 5, wobei
ein elektrischer Doppelschichtkondensator als die Stromspeichereinheit des genannten Positionszeigers verwendet wird.

7. Elektrisches Gerät, umfassend:
eine Sensortafel nach einem der Ansprüche 1 oder 2.

8. Elektrisches Gerät, umfassend:
eine Positionserkennungsvorrichtung nach einem der Ansprüche 3 bis 6.

9. Elektrisches Gerät nach Anspruch 7 oder 8, das ein Computer, ein Personal Digital Assistant, eine Digitalkamera, ein Mobiltelefon, ein Smartphone oder eine Anzeigeeinrichtung für digitale Bilder ist.

10. Verfahren zum Betreiben einer aufladbaren Zeigevorrichtung und Sensortafel, wobei die Sensortafel eine Erregerspule und einen Erkennungsbereich umfasst, wobei das Verfahren umfasst:
Bestimmen der Position im Erkennungsbereich der aufladbaren Zeigevorrichtung (S5, S6);
**dadurch gekennzeichnet, dass** das Verfahren ferner umfasst Aufladen der aufladbaren Zeigevorrichtung (S12), wenn sie in der Nähe der Erregerspule ist, wobei die genannte Erregerspule mit einer Wechselspannung versorgt wird, wenn ein erkanntes Ergebnis der Position, auf die der genannte Positionszeiger zeigt, innerhalb eines vorbestimmten Entfernungsbereichs von einer Position ist, wo die genannte Erregerspule angeordnet ist.

11. Verfahren nach Anspruch 10, wobei die Erregerspule um den Umfang des Erkennungsbereichs gewickelt ist und der Schritt des Aufladens der aufladbaren Zeigevorrichtung ferner das Aufladen der aufladbaren Zeigevorrichtung umfasst, wenn sie in einer Umfangsposition ist.

## Revendications

1. Panneau de détection destiné à la détection de la position pointée par un pointeur de position, le panneau de détection comprenant :
- une bobine excitatrice (19) enroulée autour d'une circonférence d'une zone de détection de position, un circuit d'excitation (21) fonctionnant pour alimenter une tension alternative à ladite bobine excitatrice, un détecteur de signal de pointage de position (11) destiné à la détection d'un signal de pointage de position à partir dudit pointeur de position,
**caractérisé en ce que**
le panneau de détection comprend en outre un dispositif de commande d'excitation (20) pour la commande d'une alimentation de la tension alternative à ladite bobine excitatrice en fonction dudit signal de pontage de position détecté, où ledit dispositif de commande d'excitation peut fonctionner pour alimenter la tension alternative à ladite bobine excitatrice lorsqu'un résultat détecté de la position pointée par ledit pointeur de position est à l'intérieur d'une plage de distance prédéterminée à partir d'une position où ladite bobine excitatrice est agencée.

2. Panneau de détection selon la revendication 1, dans lequel
ledit panneau de détection et un dispositif d'affichage (22) sont formés d'un seul tenant.

3. Dispositif de détection de position comprenant :
un pointeur de position fonctionnant pour transmettre un signal de pointage de position par une alimentation en énergie stockée dans une unité de stockage d'énergie rechargeable (31) ; et
un panneau de détection selon l'une quelconque des revendications 1 ou 2.

4. Dispositif de détection de position selon la revendication 3, dans lequel
une bobine (30a) dans ledit pointeur de position peut fonctionner pour, à la fois, recevoir un signal de chargement par ladite tension alternative à partir de la bobine excitatrice dudit panneau de détection et transmettre ledit signal de pointage de position audit panneau de détection.

5. Dispositif de détection de position selon la revendication 4 dans lequel
ledit pointeur de position inclut un circuit résonnant (30) configuré avec une bobine (30a) et un condensateur (30b).

6. Dispositif de détection de position selon la revendication 3 à 5, dans lequel un condensateur électrique à double couche est utilisé en tant qu'unité de stockage d'énergie dudit pointeur de position.

7. Appareil électrique comprenant :
un panneau de détection selon l'une quelconque des revendications 1 ou 2.

8. Appareil électrique comprenant :
un dispositif de détection de position selon l'une quelconque des revendications 3 à 6.

9. Appareil électrique selon les revendications 7 ou 8 étant un ordinateur, un assistant numérique personnel, une caméra numérique, un téléphone mobile, un smart phone ou un appareil de présentation de photographies numérique.

10. Procédé de mise en oeuvre d'un dispositif de pointage chargeable et d'un panneau de détection, le panneau de détection comprenant une bobine d'excitation et une zone de détection, le procédé comprenant :
la détermination de la position du dispositif de pointage (S5 ; S6) chargeable dans la zone de détection ;
**caractérisé en ce que** le procédé comprenne en outre la charge du dispositif de pointage (S12) chargeable s'il est au voisinage de la bobine d'excitation, où une tension alternative est alimentée dans ladite bobine d'excitation lorsqu'un résultat détecté de la position pointée par ledit pointeur de position est dans une plage de distance prédéterminée à partir d'une position où ladite bobine excitatrice est agencée.

11. Procédé selon la revendication 10, dans lequel la bobine d'excitation est enroulée autour de la circonférence de la zone de détection, et l'étape de chargement du dispositif de pointage chargeable comprend rn outre le chargement du dispositif de pointage chargeable s'il est dans une position sur la circonférence.
